# EUROPEAN PATENT APPLICATION

(11) **EP 3 557 363 A1**
(43) Date of publication of application: **23.10.2019**
(21) Application number: 18168454.9
(22) Date of filing: 20.04.2018
(51) Int. Cl.: G05D 16/06

(54) **GAS PRESSURE REGULATOR**

(71) Applicant: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: Kaya, Cerkez, 47805 Krefeld (DE)
(74) Representative: KNH Patentanwälte Neumann Heine Taruttis PartG mbB

(57) **Abstract**

Gas pressure regulator (1) comprising:
- a chamber (2) that is partly confined by a deformable membrane (3) for regulating a gas pressure, and
- a sealing element (8) arranged between the membrane (3) and a first housing (10) that adjoins the membrane (3) on a first side (12) of the membrane (3) and/or a sliding element (9) arranged between the membrane (3) and a second housing (11) that adjoins the membrane (3) on a second side (13) of the membrane (3),
wherein the sealing element (8) and/or the sliding element (9) comprise a metal.

A gas pressure regulator (1) is provided, wherein a membrane (3) is sealed using metallic sealing and sliding elements (8, 9). Due to a similar thermal expansion behavior of the membrane (3) and the sealing and sliding elements (8, 9), stress acting upon the membrane (3) when undergoing temperature changes can be reduced. This reduces the risk of a leakage caused by irreversible deformation of the membrane (3). Thus, the gas pressure regulator (1) has a particularly long lifetime, even when used with gases such as ethylene.

## Description

The present invention is directed to a gas pressure regulator, in particular for regulating the pressure of ethylene. Also, the invention is directed to an arrangement for the gas pressure regulator and to a use of the gas pressure regulator.

In many applications gas is supposed to be used with a predefined pressure. Usually, the gas is stored at a high pressure that is not exactly known and that may vary over time. In particular if gas from a pressurized gas bottle is used the available gas pressure decreases over time with consumption of the gas. For adjusting the pressure of the gas to a predefined target value, gas regulators are known. Gas with an unknown and unstable initial pressure can be supplied to an inlet of such a gas regulator and gas with a final pressure that is constantly equal to the target value can be extracted from an outlet of the gas regulator.

Known gas regulators have a deformable membrane that is exposed to gas having the final pressure. For regulating the gas pressure, a predefined force is applied to the membrane, for example by a spring. The membrane is configured and connected to a valve element such that the outlet and the inlet of the gas regulator are connected to each other only if the force corresponding to the final gas pressure acting upon the membrane is smaller than the force applied to the membrane by the spring. By opening the valve element, gas having the initial pressure can proceed to the outlet, thereby increasing the final pressure. Once the final pressure has increased such that the force corresponding to the final gas pressure acting upon the membrane is larger than the force applied to the membrane by the spring, the valve element closes. This is the case if the final pressure is at the target value. Thus, the final pressure can be maintained at the target value.

Known gas regulators often have only a short lifetime. This is often due to a gas leakage between the membrane and a housing of the gas regulator. Due to such a leakage the final pressure may deviate from the predefined target value such that the gas regulator is no longer ready for use.

Leakage between the membrane and the housing particularly occurs with gases such as ethylene that undergo a significant change in temperature during pressure regulation. With the membrane temperature frequently changing over a wide temperature range, the membrane can be irreversibly deformed. Once deformed, the interface between the housing and the membrane is usually no longer gas tight. Replacement of the membrane or even of the entire gas regulator is usually required in such a case, causing significant costs and requiring significant repair time. Further, in particular if the gas is flammable and/or toxic leakages provide a significant health and safety issue.

It is, therefore, an object of the present invention to overcome at least in part the disadvantages known from prior art and, in particular, to provide a particularly reliable gas regulator.

These objects are solved by the features of the independent claims. Dependent claims are directed to preferred embodiments of the present invention.

A gas regulator is provided that comprises:
- a chamber that is partly confined by a deformable membrane for regulating a gas pressure, and
- a sealing element arranged between the membrane and a first housing that adjoins the membrane on a first side of the membrane and/or a sliding element arranged between the membrane and a second housing that adjoins the membrane on a second side of the membrane,
wherein the sealing element and/or the sliding element comprise a metal.

The gas pressure regulator is configured for converting a gas pressure from an initial pressure to a final pressure. The final pressure can be maintained constant at a target value even if the initial pressure varies over time. In particular, the final pressure can be lower than the initial pressure. In that case the gas pressure regulator can also be referred to as a gas pressure reducer. The gas pressure regulator can be used with any gas. Therein, the term gas is used to describe substances that are in a gaseous state at ambient temperature and ambient pressure. Thus, a gas within this meaning can also be in a liquid state at low temperatures and/or high pressures. It is preferred that the gas pressure regulator is configured in particular for regulating the pressure of toxic and/or flammable gases, preferably of ethylene (which is also known as ethene and which is represented by the chemical formula C₂H₄). This means in particular that the gas pressure regulator is preferably able to withstand temperatures that occur when regulating the pressure of ethylene. In particular, the gas pressure regulator is preferably made of materials suitable for such temperatures. This can be in particular metals such as stainless steel.

The chamber is confined by the first housing and by the membrane. The first housing preferably has a pot-like shape. That is, the first housing defines a space within its boundaries, wherein the first housing has an opening that can be covered by the membrane. If the membrane and the first housing are connected to each other, the chamber is preferably entirely confined to all sides. Thereby, the first housing and the membrane preferably confine the chamber in a gas tight manner such that - except for openings for introducing gas into or extracting gas from the chamber - the gas cannot leak from the chamber.

In particular, an interface between the first housing and the membrane is preferably sealed in a gas tight manner. The sealing element can enhance the gas tightness of the interface between the first housing and the membrane. Therefore, the sealing element is arranged between the first housing and the membrane. The first side of the membrane faces the inside of the chamber. Thus, the sealing element is arranged on the first side of the membrane. The sealing element preferably extends across the entire interface between the first housing and the membrane. In that case the first housing and the membrane are in contact with each other only via the sealing element.

The sliding element is arranged between the membrane and the second housing. Thus, the sliding element can facilitate a movement of the membrane relative to the second housing. Such movement can occur due to minor difference in thermal expansion of the membrane and the second housing.

The gas tightness of the interface between the first housing and the membrane can be improved in particular by means of the sealing element that is directly provided at this interface. Also, the sliding element can contribute to the gas tightness of the interface between the first housing and the membrane, although the sliding element is provided at the second side of the membrane and, thus, outside the chamber. This is due to the fact that the tightness of the interface between the first housing and the membrane is particularly affected by the force which is exerted to press the first housing and the membrane together. This force can be particularly exerted onto the membrane by means of the second housing via the sliding element. The second housing preferably has a pot-like shape with an opening of the same shape as the opening of the first housing. Thus, when put together, the first housing and the second housing are flush with each other and confine a space that is, by means of the membrane, divided into two parts, one of which being the described chamber. Unlike the first housing, the second housing does not have to be gas tight since the gas is supposed to be contained within the described chamber within the first housing and not within the second housing. The second housing, thus, may also have further openings. In particular, the second housing can be merely configured as a ring-shaped counterpart for fixing the membrane and the sealing element(s) on the first housing.

The gas pressure regulator can comprise only the sealing element, only the sliding element or both the sealing element and the sliding element. It is preferred that the gas pressure regulator comprises at least the sealing element. It is even more preferred that the gas pressure regulator comprises both the sealing element and the sliding element.

If only the sliding element is provided and not the sealing element, the first housing and the membrane are preferably in direct contact with each other. In that case the gas tightness of the interface between the first housing and the membrane can be achieved for example by a force fit between the first housing and the membrane. Also, a sealing element that is not configured as the sealing element can be used, in particular a sealing element made of rubber.

If only the sealing element is provided and not the sliding element, the second housing and the membrane are preferably in direct contact with each other, preferably by means of a force fit. Also, a sealing element that is not configured as the sliding element can be used, in particular a sealing element made of rubber.

It has been found that the gas tightness of the chamber can be enhanced if the sealing element and/or the sliding element are made of a metal. Preferably, the sealing element and/or the sliding element contain only metal. In particular, it has been found that the chance of irreversible deformation of the membrane, in particularly after several cycles of use, gets particularly low when using a metallic sealing element and/or a metallic sliding element. Since irreversible deformation of the membrane usually results in gas leakage between the first housing and the membrane, such deformation of the membrane is likely to require replacement of the membrane or the entire gas pressure regulator. It is particularly preferred that the sealing element and/or the sliding element are made entirely of metal, that is that the sealing element and/or the sliding element contain only metal.

The fact that the sealing element and/or the sliding element have a property such as being metallic is supposed to be understood such that in case that both the sealing element and the sliding element are provided, preferably both the sealing element and the sliding element have this property. However, it is also possible that only one of the sealing element and the sliding element has the property. If only one of the elements is provided, the property is defined for this element only.

The finding that a metallic sealing is advantageous can be applied to any gas pressure regulator that is operated by confining the gas within a supposedly gas tight chamber by a first housing and a membrane. This is applicable independently of the exact construction of the gas pressure regulator and of the way the gas pressure is regulated therewith. In the following, the gas regulation is described with respect to a preferred embodiment to which the invention is not limited.

According to this preferred embodiment the gas pressure regulator further comprises:
- an inlet for introduction of gas having an initial pressure into the chamber and an outlet for extraction of gas having a final pressure from the chamber,
- a force element for applying a force onto the membrane for varying the volume of the chamber by reversible deformation of the membrane, and
- a valve arranged at the inlet for opening and closing the inlet depending on the pressure within the chamber and the force applied to the membrane by the force element.

Gas having the initial pressure can be introduced into the chamber via the inlet. Within the chamber, the gas has the final pressure which is supposed to be equal to the target value. Via the outlet the gas having the final pressure can be extracted from the chamber.

Regulating the pressure from the initial pressure to the final pressure can be obtained in particular by means of the membrane, the force element and the valve.

Due to the deformable membrane the volume of the chamber can be varied. The first housing is preferably not deformable such that only the deformation of the membrane can cause a change in the chamber volume. The pressure of the gas within the chamber acts upon the first side of the membrane, thus tending to expand the chamber. A force created by the force element preferably counteracts this tendency. That is, the force element is preferably configured and arranged such that a force generated by the force element acts onto the second side of the membrane such that the chamber volume is decreased thereby. The force element is preferably a spring. In particular, the force element can be contained within the second housing. The force element can be attached to the second housing such that the force element can generate a force between the membrane and the second housing.

The valve is preferably arranged at the inlet such that the inlet can be opened and closed by the valve depending on the position of the membrane. Therefore, the valve preferably comprises a connection means such as a rod that is in contact with the membrane.

If the force corresponding to the pressure of the gas within the chamber, that is the final pressure, is in equilibrium with the force generated by the force element, the membrane does not move. In that case the valve is preferably closed. This is preferably the case if the final pressure is at the target value. If the final pressure becomes smaller than the target value, the chamber volume is decreased since the force generated by the force element exceeds the force corresponding to the final pressure. By decreasing the chamber volume, the final pressure is increased until the target pressure is reached again. Also, the valve is preferably configured such that it opens the inlet if the membrane is moved such that the chamber volume is decreased. By opening the inlet, gas having the initial pressure can enter the chamber. If the initial pressure is higher than the final pressure, opening the inlet increases the pressure within the chamber. Thereby, the chamber volume is increased until the final pressure reaches the target value and the valve closes the inlet.

By this configuration, the final pressure can be constantly maintained at the target value. The target value corresponds to the force generated by the force element. This force is preferably adjustable such that the target value is adjustable. This may be achieved, for example, by means of a set screw attached to a spring as the force element. By rotating the set screw the space available for the spring can be varied, such that the force generated by the spring can be varied.

According to a further preferred embodiment of the gas pressure regulator the sealing element and/or the sliding element comprise copper and/or tin bronze.

Preferably, the sealing element and/or the sliding element are made of copper and/or tin bronze only. It is particularly preferred that the sealing element is made of copper, in particular soft copper, and that the sliding element is made of tin bronze.

According to a further preferred embodiment of the gas pressure regulator the membrane comprises CrNi steel.

It has been found that in particular when using a membrane of CrNi steel a metallic sealing element and/or a metallic sliding element are advantageous. That is, the combination of CrNi steel as the material for the membrane and a metal as the material for the sealing element and/or for the sliding element can reduce irreversible deformation of the membrane particularly well. Preferably, the membrane is made of CrNi steel only.

According to a further preferred embodiment of the gas pressure regulator a coefficient of thermal expansion of the sealing element and/or of the sliding element deviate from a coefficient of thermal expansion of the membrane by less than 20 %.

The deviation is supposed to be understood as a comparison between the respective coefficient of the sealing element and/or of the sliding element on the one hand and the coefficient of the membrane on the other hand.

It has been found that irreversible deformation of the membrane is often caused by the fact that the sealing element and/or the sliding element and the membrane have a different thermal expansion behavior. Since the sealing or sliding elements) is/are attached to the membrane, such different expansion behavior can result in stress acting upon the membrane and irreversibly deforming the membrane during temperature increase or decrease. The membrane and the sealing or sliding element(s) can have particularly similar thermal expansion coefficients if the membrane and the sealing or sliding element(s) are made of metal.

If the sealing element and/or the sliding element and/or the membrane are composed of respective sections of different materials, the described condition is supposed to be fulfilled for all such sections. For example, if the membrane is composed of a first section and a second section with different coefficients of thermal expansion, the described condition is supposed to be fulfilled for both the first and the second section of the membrane.

According to a further preferred embodiment of the gas pressure regulator a coefficient of thermal expansion of the membrane and/or of the sealing element and/or of the sliding element is in the range from 1 x 10⁻⁶ K⁻¹ to 50 x 10⁻⁶ K⁻¹.

Preferably, the coefficient of thermal expansion of the membrane and of the sealing element and of the sliding element is in the range from 1 x 10⁻⁶ K⁻¹ to 50 x 10⁻⁶ K⁻¹. Preferably, the coefficient of thermal expansion of the membrane and/or of the sealing element and/or of the sliding element is in the range from 10 x 10⁻⁶ K⁻¹ to 25 x 10⁻⁶ K⁻¹.

If the sealing element and/or the sliding element and/or the membrane are composed of respective sections of different materials, the described condition is supposed to be fulfilled for all such sections.

According to a further preferred embodiment of the gas pressure regulator the first housing and/or the second housing is made of brass having a coefficient of thermal expansion in the range from 15 x 10⁻⁶ K⁻¹ to 20 x 10⁻⁶ K⁻¹, and wherein a coefficient of thermal expansion of the membrane and/or of the sealing element and/or of the sliding element deviate from the coefficient of thermal expansion of the first housing and/or of the second housing by less than 20 %.

The fact that the first housing and/or the second housing are made of brass is supposed to be understood such that the first housing and/or the second housing are made essentially of brass, wherein in particular minor impurities are acceptable. It is preferred that both the first housing and the second housing are made of brass having a coefficient of thermal expansion in the range from 15 x 10⁻⁶ K⁻¹ to 20 x 10⁻⁶ K⁻¹.

It is preferred that a coefficient of thermal expansion of the membrane and of the sealing element and of the sliding element deviate from the coefficient of thermal expansion of the first housing or of the second housing by less than 20 %, preferably from the coefficient of thermal expansion of both the first housing and of the second housing by less than 20 %. The deviation is supposed to be understood as a comparison between the respective coefficient of the membrane and/or of the sealing element and/or of the sliding element on the one hand and the respective coefficient of the first housing and/or of the second housing on the other hand.

According to a further preferred embodiment of the gas pressure regulator the sealing element and/or the sliding element have a ring shape.

The opening(s) of the first housing and/or of the second housing that are covered by the membrane and, optionally, also the membrane preferably have a respective circular shape. In that case, a ring-shaped sealing element and/or a ring-shaped sliding element can cover the entire interface between the membrane and the first housing or the second housing, respectively. The sealing element and/or the sliding element can be provided at the edge of the membrane.

According to a further preferred embodiment of the gas pressure regulator the membrane comprises a structured first sealing section for receiving the sealing element and/or a structured second sealing section for receiving the sliding element.

The structured first sealing section and/or the structured second sealing section can improve the gas tightness of the chamber. For example, the first sealing section can have ribs configured in a concentric manner with the shape of the opening of the first housing that is covered by the membrane. Such ribs can prevent a gas leakage stream from the inside of the chamber to the outside of the chamber. The ribs can be considered barriers for such a leakage stream. In general, gas tightness between two surfaces can be increased if one or both of the surfaces forming the interface is/are structured. Structured within the meaning used herein is supposed to be understood as comprising protrusions and/or recesses of a dimension that is small compared to the dimension of the interface. This refers both to a lateral expansion as well as to a height of the structure elements.

Within the meaning of the term sealing section used herein, the surface of the membrane in the sealing section is necessarily different from the remaining parts of the membrane. That is, a membrane with an entirely and uniformly structured surface is not supposed to be seen as comprising a sealing section. There has to be at least a part of the membrane that has a different surface structure than the sealing sections.

According to a further preferred embodiment of the gas pressure regulator the sealing element and/or the sliding element are configured as a coating.

The membrane and the sealing element(s) can be manufactured in a particular simple way if the sealing element(s) are provided to the membrane as a coating. In that case the arrangement of the membrane and the sealing element(s) can be manufactured together. When necessary, the entire arrangement of the membrane and the sealing element(s) can be replaced. The coating is preferably a layer having a thickness of less than 1,5 mm, in particular between 0,1 mm and 1 mm.

According to a further preferred embodiment of the gas pressure regulator the coating is configured as a multilayer coating.

For example, the coating can have a first layer that is attached to the membrane and that is made of aluminum and a second layer on top of the first layer, wherein the second layer is made of copper. Such a multilayer configuration can have the advantage that the sealing element(s) can act as a mediator between the membrane and the first housing or the second housing, respectively. To a certain extent, a different thermal expansion of the elements that are connected to each other can be compensated by the different layers of the coating.

According to a further preferred embodiment of the gas pressure regulator the membrane is formed as one piece with the sealing element and/or with the sliding element.

The fact that the membrane and the sealing element(s) are formed as one piece means in particular that the membrane and the sealing element(s) are made of the same material. Thus, the thermal expansion coefficient is the same for the membrane and for the sealing element(s).

According to a further preferred embodiment of the gas pressure regulator the sealing element and/or the sliding element are configured as an annular protrusion of the membrane.

In this embodiment ring-shaped sealing element(s) are formed as one piece with the membrane.

According to a further aspect a use of the described gas pressure regulator for regulating the pressure of ethylene as the gas is provided.

The details and advantages disclosed for the described gas pressure regulator can be applied to the described use, and vice versa.

In particular when regulating the pressure of ethylene the gas pressure regulator undergoes significant changes in temperature. Thus, it is particularly advantageous to use the described gas pressure regulator with ethylene.

As a further aspect an arrangement is provided that comprises
- a membrane for a gas pressure regulator and
- a sealing element on a first side of the membrane and/or a sliding element on a second side of the membrane,
wherein the sealing element and/or the sliding element comprise a metal.

The details and advantages disclosed for the described gas pressure regulator and of the described use can be applied to the described arrangement, and vice versa.

It should be noted that the individual features specified in the claims may be combined with one another in any desired technologically reasonable manner and form further embodiments of the invention. The specification, in particular taken together with the figures, explains the invention further and specifies particularly preferred embodiments of the invention. Particularly preferred variants of the invention and the technical field will now be explained in more detail with reference to the enclosed figures. It should be noted that the exemplary embodiment shown in the figures is not intended to restrict the invention. The figures are schematic and may not be to scale. The figures display:
- Fig. 1:: a schematic cross sectional side view of first embodiment of a gas pressure regulator,
- Fig. 2:: a top view of an arrangement comprising a membrane, a sealing ele-ment and a sliding element,
- Fig. 3:: a cross-sectional top view of the arrangement of Fig. 2,
- Fig. 4:: a schematic cross-sectional side view of the arrangement of Fig. 2 and 3,
- Fig. 5:: a schematic cross-sectional side view of second embodiment of a gas pressure regulator,

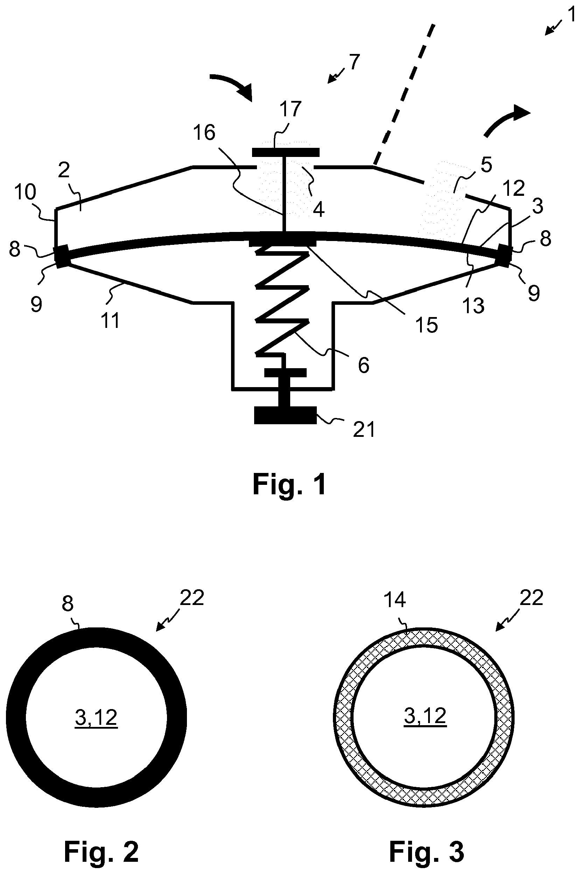

Fig. 1 shows a gas pressure regulator 1 in particular for regulating the pressure of ethylene. The gas pressure regulator 1 comprises a chamber 2 that is partly confined by a deformable membrane 3. The membrane 3 is made of CrNi steel. Further, the chamber 2 is confined by a first housing 10. The chamber 2 has an inlet 4 for introduction of gas having an initial pressure into the chamber 2, as indicated by an arrow. Also, the chamber 3 has an outlet 5 for extraction of gas having a final pressure from the chamber 3, as indicated by a further arrow. By means of a dashed line it is indicated that the surrounding of the gas pressure regulator 1 is divided such that gas having the initial pressure and gas having the final pressure is not mixed outside the gas pressure regulator 1. A spring is provided as a force element 6 for applying a force onto the membrane 3 for varying the volume of the chamber 2 by reversible deformation of the membrane 3. The force element 6 is attached to a second housing 11 such that the force can be generated between the membrane 3 and the second housing 11. To the membrane 3 the force element 6 is attached by means of a buffer element 15. Further, a valve 7 is provided that is arranged at the inlet 4 for opening and closing the inlet 4 depending on the pressure within the chamber 2 and the force applied to the membrane 3 by the force element 6. The valve 7 comprises a stamp 17 for opening and closing the inlet 4. In Fig. 1, an open state of the stamp 17 is shown. By means of a rod 16, which is also part of the valve 7, the stamp 17 is connected to the membrane 3.

The pressure of the gas within the chamber 2, that is the final pressure, corresponds to a force acting upon a first side 12 of the membrane 3. This force is directed downwards in Fig. 1. The force generated by the force element 6 acts upon a second side 13 of the membrane 3. This force is directed upwards in Fig. 1. If the force corresponding to the final pressure is smaller than the force generated by the force element 6, the membrane 3 is pushed upwards, thereby opening the valve 7. Then, gas at the initial pressure can flow into the chamber 2. Provided the initial pressure is higher than the final pressure, the final pressure is increased by adding gas having the initial pressure to the chamber 2. Accordingly, the membrane 3 is pushed downwards such that the valve 7 closes the inlet 4. This way, the final pressure can be maintained constant at a target value that corresponds to the pressure generated by the force element 6. For adjusting this force, a set screw 21 is provided. By means of the set screw 21, the space available for the force element 6 can be adjusted, thereby influencing the force generated by the force element 6.

The gas pressure can be regulated as described in a particularly reliable way if the chamber 2 is - except for the inlet 4 and the outlet 5 - concealed in a gas tight manner. For improving the gas tightness of the interface between the first housing 10 and the membrane 3 a sealing element 8 and a sliding element 9 are provided. The sealing element 8 is arranged between the membrane 3 and the first housing 10 that adjoins the membrane 3 on the first side 12. The sliding element 9 is arranged between the membrane 3 and the second housing 11 that adjoins the membrane 3 on the second side 13.

It has been found that a particularly long lifetime of the gas pressure regulator 1 can be achieved if the sealing element 8 and the sliding element 9 comprise a metal, in particular copper and/or tin bronze. It is particularly preferred that the sealing element 8 is made of copper, in particular soft copper, and that the sliding element 9 is made of tin bronze. Due to this choice of materials the coefficient of thermal expansion of the sealing element 8 and of the sliding element 9 can deviate from a coefficient of thermal expansion of the membrane 3 by less than 20 %. The coefficient of thermal expansion of the membrane 3, of the sealing element 8 and of the sliding element 9 is in the range from 1 x 10⁻⁶ K⁻¹ to 50 x 10⁻⁶ K⁻¹. Thereby, changes in temperature during operation of the gas pressure regulator 1 are less likely to cause an irreversible deformation of the membrane 3 that would result in a leakage of the chamber 2.

Fig. 2 is a top view of an arrangement 22 comprising the membrane 3 and the sealing element 8. This arrangement 22 may be comprised within the gas pressure regulator 1 depicted in Fig. 1. The top view shows the first side 12 of the membrane 3. From the second side 13 the membrane 3 with the sliding element 9 may look the same (not shown). As can be seen in Fig. 2, the sealing element 8 has a ring shape. The sliding element 9 may have the same shape (not shown).

Fig. 3 is a cross-sectional top view of the arrangement 22 of Fig. 2. The cross section refers to a position between the membrane 3 and the sealing element 8 (not shown). It can be seen that the membrane 3 comprises a structured first sealing section 14 on the first side 12. The first sealing section 14 is configured for receiving the sealing element 8. Similarly, a structured second sealing section 18 may be provided on the second side 13 of the membrane 3 (not shown).

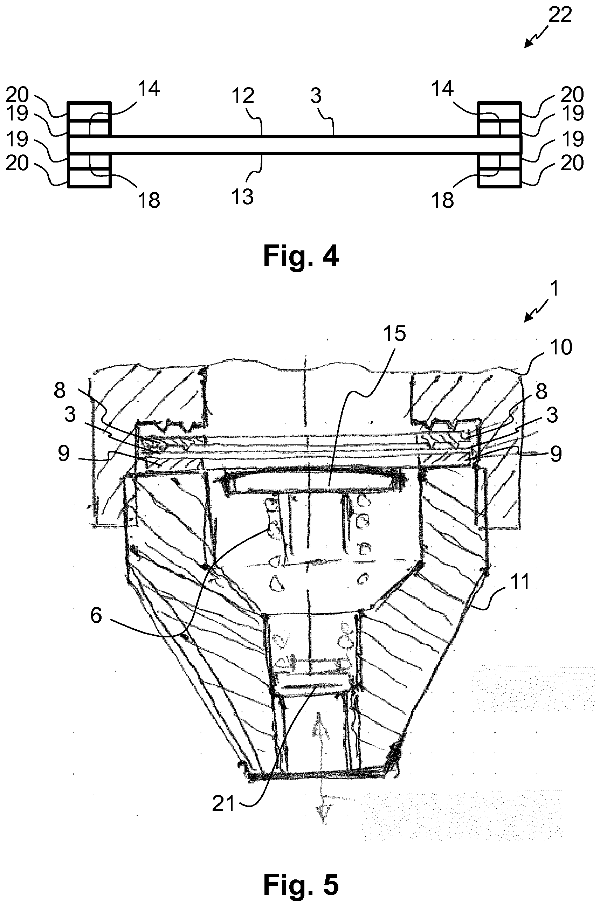

Fig. 4 shows a schematic cross sectional side view of the arrangement 22 of Fig. 2 and 3. Therein, it can be seen that the sealing element 8 and the sliding element 9 are configured as a multilayer coating with a respective first layer 19 and a respective second layer 20. Also, the first sealing section 14, the second sealing section 18, the first side 12 and the second side 13 are indicated.

Fig. 5 shows a schematic cross sectional side view of a gas pressure regulator 1 that comprises the same elements as the gas pressure regulator 1 from Fig. 1. In particular, the membrane 3, the sealing element 8, the sliding element 9, the first housing 10, the second housing 11, the force element 6, the set screw 21 and the buffer element 15 are shown. The embodiment depicted in Fig. 5 deviates from the embodiment of Fig. 1 merely by construction details. Thus, the description of Fig. 1 also applies to Fig. 5.

A gas pressure regulator 1 is provided, wherein a membrane 3 is sealed using metallic sealing and sliding elements 8, 9. Due to a similar thermal expansion behavior of the membrane 3 and the sealing and sliding elements 8, 9, stress acting upon the membrane 3 when undergoing temperature changes can be reduced. This reduces the risk of a leakage caused by irreversible deformation of the membrane 3. Thus, the gas pressure regulator 1 has a particularly long lifetime, even when used with gases such as ethylene.

### List of reference numerals

- 1: Gas pressure regulator
- 2: chamber
- 3: membrane
- 4: inlet
- 5: outlet
- 6: force element
- 7: valve
- 8: sealing element
- 9: sliding element
- 10: first housing
- 11: second housing
- 12: first side
- 13: second side
- 14: first sealing section
- 15: buffer element
- 16: rod
- 17: stamp
- 18: second sealing section
- 19: first layer
- 20: second layer
- 21: set screw
- 22: arrangement

## Claims

1. Gas pressure regulator (1) comprising:
- a chamber (2) that is partly confined by a deformable membrane (3) for regulating a gas pressure, and
- a sealing element (8) arranged between the membrane (3) and a first housing (10) that adjoins the membrane (3) on a first side (12) of the membrane (3) and/or a sliding element (9) arranged between the membrane (3) and a second housing (11) that adjoins the membrane (3) on a second side (13) of the membrane (3),
wherein the sealing element (8) and/or the sliding element (9) comprise a metal.

2. Gas pressure regulator (1) according to claim 1, further comprising:
- an inlet (4) for introduction of gas having an initial pressure into the chamber (2) and an outlet (5) for extraction of gas having a final pressure from the chamber (2),
- a force element (6) for applying a force onto the membrane (3) for varying the volume of the chamber (2) by reversible deformation of the membrane (3), and
- a valve (7) arranged at the inlet (4) for opening and closing the inlet (4) depending on the pressure within the chamber (2) and the force applied to the membrane (3) by the force element (6).

3. Gas pressure regulator (1) according to one of the preceding claims, wherein the sealing element (8) and/or the sliding element (9) comprise copper and/or tin bronze.

4. Gas pressure regulator (1) according to one of the preceding claims, wherein the membrane (3) comprises CrNi steel.

5. Gas pressure regulator (1) according to any of the preceding claims, wherein a coefficient of thermal expansion of the sealing element (8) and/or of the sliding element (9) deviate from a coefficient of thermal expansion of the membrane (3) by less than 20 %.

6. Gas pressure regulator (1) according to any of the preceding claims, wherein a coefficient of thermal expansion of the membrane (3) and/or of the sealing element (8) and/or of the sliding element (9) is in the range from 1 x 10⁻⁶ K⁻¹ to 50 x 10⁻⁶ K⁻¹.

7. Gas pressure regulator (1) according to any of the preceding claims, wherein the first housing (10) and/or the second housing (11) is made of brass having a coefficient of thermal expansion in the range from 15 x 10⁻⁶ K⁻¹ to 20 x 10⁻⁶ K⁻¹, and wherein a coefficient of thermal expansion of the membrane (3) and/or of the sealing element (8) and/or of the sliding element (9) deviate from the coefficient of thermal expansion of the first housing (10) and/or of the second housing (11) by less than 20 %.

8. Gas pressure regulator (1) according to any of the preceding claims, wherein the sealing element (8) and/or the sliding element (9) have a ring shape.

9. Gas pressure regulator (1) according to any of the preceding claims, wherein the membrane (3) comprises a structured first sealing section (14) for receiving the sealing element (8) and/or a structured second sealing section (18) for receiving the sliding element (9).

10. Gas pressure regulator (1) according to any of the preceding claims, wherein the sealing element (8) and/or the sliding element (9) are configured as a coating.

11. Gas pressure regulator (1) according to claim 10, wherein the coating is configured as a multilayer coating.

12. Gas pressure regulator (1) according to any of the preceding claims, wherein the membrane (3) is formed as one piece with the sealing element (8) and/or with the sliding element (9).

13. Gas pressure regulator (1) according to claim 12, wherein the sealing element (8) and/or the sliding element (9) are configured as an annular protrusion of the membrane (3).

14. Use of a gas pressure regulator (1) according to any of the preceding claims for regulating the pressure of ethylene as the gas.

15. Arrangement (22) comprising:
- a membrane (3) for a gas pressure regulator (1), and
- a sealing element (8) on a first side (12) of the membrane (3) and/or a sliding element (9) on a second side (13) of the membrane (3),
wherein the sealing element (8) and/or the sliding element (9) comprise a metal.
